# EUROPÄISCHE PATENTSCHRIFT

(11) **EP 2 881 016 B1**
(45) Veröffentlichungstag und Bekanntmachung des Hinweises auf die Patenterteilung: **14.06.2017**
(21) Anmeldenummer: 14194197.1
(22) Anmeldetag: 20.11.2014
(51) Int. Cl.: A47J 31/42, A47J 31/06, A47J 31/00

(54) **Elektrisch betriebene Kaffeemaschine mit Entlastung beim nassen Mehlverpressen**
Electric coffee machine with easier pressing of wet grounds
Machine à café électrique ayant une évacuation en cas de compression de moût humide

(30) Priorität: 06.12.2013 DE 102013225127
(43) Veröffentlichungstag der Anmeldung: 10.06.2015
(73) Patentinhaber: WMF Group GmbH, 73312 Geislingen/Steige (DE)
(72) Erfinder: Bais, Johannes, 89075 Ulm (DE)
(74) Vertreter: Pfenning, Meinig & Partner mbB

(56) Entgegenhaltungen:
- CH-A1- 706 100

## Beschreibung

Die vorliegende Erfindung bezieht sich auf eine elektrisch betriebene Kaffeemaschine, bei der beim Mehlverpressen (dem sogenannten Tampern) eine Entlastungstechnik durchgeführt wird, um ein Aufreißen bzw. Zerstören des verpressten Kaffeemehls (Kaffeekuchens) zu verhindern. Die Erfindung bezieht sich darüber hinaus auf ein entsprechendes Verfahren zum Betreiben einer elektrischen Kaffeemaschine.

Aus dem Stand der Technik (CH 706 100 A1) ist eine einen Kolbenbrüher verwendende elektrische Kaffeemaschine bekannt. Dabei wird das trockene, gemahlene Kaffeemehl in einem durch einen Benutzer abnehmbaren Zylinder (Siebträger) gefasst und mit einem Kolben vor einer Druckbrühung verpresst, um das Kaffeemehl zu verdichten und einen Wasserwiderstand zu erzeugen, damit eine ausreichend lange Brühzeit für eine optimale Extraktionsrate erreicht wird.

Da der Kolben (nachfolgend allgemeiner als Pressmittel bezeichnet) jedoch eine Zuleitung zur Zufuhr von Wasser unter Druck in die Brühkammer aufweist, ist es unvermeidbar, dass die Unterseite des Pressmittels feucht ist. Diese Nässe dringt während des Anpressens des trockenen Kaffeemehls in die Kaffeemehlpartikel ein. Diese verbinden sich und bleiben anschließend beim Auffahren des Pressmittels an der Unterseite des Pressmittels hängen. Dadurch wird das verpresste Kaffeemehl an seiner Oberfläche auseinandergerissen. Beginnt dann die Brühung, ist ein sogenanntes "Channeling" unvermeidbar: Das Wasser sucht sich den Weg mit dem geringsten Widerstand an unterschiedlichen Stellen durch den aufgerissenen Kaffeekuchen, was zu einer verkürzten Extraktionszeit führt. Die Qualität des Kaffeegetränkes sinkt dadurch merklich, da die Voraussetzung für eine gute Ausbeute und somit eine gute Qualität des Kaffeegetränks ein homogen verpresster, hinsichtlich seiner Form während der gesamten Brühzeit formbeständiger Kaffeekuchen ist, da dann der gesamte Kaffeekuchen dem Wasser während der Brühzeit den gleichen Widerstand entgegensetzt.

Die DE 299 17 586 U1 offenbart eine Espressomaschine, die eine Brühkammer und einen Brühkolben als Pressmittel umfasst. In den Brühkolben ist eine Leitung zur Zufuhr von Brühwasser integriert. Durch das Einleiten von Wasser in die Brühkammer wird Druck aufgebaut und es wirkt eine Rückstellkraft auf die Druckfeder, welche an der Kolbenstange angebracht ist, so dass sich der Brühkolben von dem Kaffeekuchen entfernt. Nachteilig an dieser Vorrichtung ist, dass keine zusätzlichen aktiven Steuerungselement vorhanden sind, mit denen flexibel auf Änderung verschiedener Parameter, wie dem Wechsel der Kaffeesorte, reagiert werden könnte.

Ausgehend vom Stand der Technik ist es somit die Aufgabe der vorliegenden Erfindung in einer Kaffeemaschine der eingangs beschriebenen Art eine Berühung mit einem homogen verpressten Kaffeekuchen zu ermöglichen, insbesondere ein Aufreißen des Kaffeekuchens durch das Hochfahren des Pressmittels bzw. Kolbens (aufgrund des Anklebens von nassen Kaffeemehlbestandteilen am Verteilersieb) zu verhindern. Aufgabe ist es darüber hinaus dafür zu sorgen, dass der Kaffeekuchen während der Brühung verpresst bleibt und dem Kuchen trotzdem Platz zum Quellen und dem Wasser Platz zum Verteilen gegeben werden kann.

Diese Aufgabe wird durch eine Kaffeemaschine gemäß Anspruch 1 sowie durch ein entsprechendes Betriebsverfahren gemäß Anspruch 13 gelöst. Vorteilhafte Ausgestaltungsvarianten lassen sich dabei jeweils den abhängigen Ansprüchen entnehmen.

Nachfolgend wird die Erfindung zunächst allgemein, dann anhand mehrerer Ausführungsbeispiele im Detail beschrieben. Die in den einzelnen Ausführungsbeispielen in Kombination miteinander verwirklichten Merkmale müssen im Rahmen des durch die Ansprüche festgelegten Schutzumfangs nicht genau in den in den Ausführungsbeispielen gezeigten Konfigurationen verwirklicht werden. Insbesondere können einzelne Merkmale der Ausführungsbeispiele auch weggelassen werden oder auf andere Art und Weise mit anderen Merkmalen desselben Ausführungsbeispiels oder eines anderen Ausführungsbeispiels kombiniert werden. Insbesondere können bereits einzelne der gezeigten Merkmale für sich eine Verbesserung des Standes der Technik darstellen.

Die Lösung der vorstehend beschriebenen Aufgabe geht von der grundlegenden Problematik aus, dass das Pressmittel (Kolben) der Kaffeemaschine eine wasserführende Leitung mit sich bringt, da das Pressmittel bzw. der Kolben (nachfolgend alternativ auch als Stempel bezeichnet) gleichzeitig der Brühkolben ist. Aufgrund von Oberflächenspannungen bleiben stets Wasserrückstände am Verteilersieb des Pressmittels zurück, die während der Verpressung des Mehls von den Partikeln des Kaffees angesaugt werden. Diese Wasserrückstände kommen beispielsweise von vorherigen Brühungen oder auch von Spülungen des Siebträgers durch das Pressmittel.

Die Lösung der Aufgabe ist in den unabhängigen Ansprüchen 1 und 13 beschrieben.

Dabei wird das verpresste Kaffeemehl auch als Kaffeekuchen (nachfolgend vereinfacht auch: Kuchen) bezeichnet. Der auf den Kaffeekuchen im Moment des beginnenden Entlastens aufgebrachte Druck kann bereits vor dem Beginn des Entlastens, also bevor die Kaffeemaschine damit beginnt, das Pressmittel wieder aus der Brühkammer (insbesondere aus deren Siebträger) herauszuführen bzw. -ziehen, ausgeübt werden (entsprechende Ansteuerung der Kaffeemaschine, insbesondere durch die nachfolgend noch beschriebene Mikroprozessor-basierte Steuereinheit). Zudem wird ein solcher Druck auf den Kaffeekuchen in der Regel erfindungsgemäß nicht nur im Moment des beginnenden Entlastens, sondern auch noch für eine vorbestimmte Zeit danach und/oder bis das Pressmittel über eine vorbestimmte Wegstrecke (gerechnet von derjenigen Stellung an, in der das Pressmittel bei maximaler Verpressung des Kaffeemehls steht) wieder aus der Brühkammer (insbesondere aus deren Siebträger) herausgeführt worden ist. Dabei wird in der Regel das Pressmittel (Kolben) nicht aus der Brühkammer (insbesondere aus deren Siebträger) herausgefahren, sondern nur gegenüber dem verpressten Kaffeemehl angehoben (beispielsweise 0,5 bis 5mm), da in der Regel der Kolben mit seiner Dichtung in der Brühkammer bzw. im Siebträger verbleiben muss, damit dieser zum Brühen flüssigkeitsdicht verschlossen ist. Dabei ist in der Regel ein Anheben ("Herausführen") des Pressmittels aus der Brühkammer bzw. aus dem Siebträger um einige wenige (z.B. 2) Millimeter ausreichend, da bereits dann ein Quellen des Kaffeekuchens in der Brühkammer ermöglicht wird und ein Channeling vermieden werden kann. Während dieser vorbestimmten Zeit bzw. solange bis das Pressmittel die vorbestimmte Wegstrecke in Öffnungsrichtung zurückgelegt hat, muss der auf den Kaffeekuchen aufgebrachte Druck nicht konstant sein, jedoch so groß, dass ein Aufreißen der dem Pressmittel gegenüberliegenden Oberfläche des Kaffeekuchens verhindert werden kann.

Nachfolgend wird die vorliegende Erfindung beispielhaft an Kaffeemaschinen beschrieben, die eine aus dem Siebträger und dem Pressmittel (Kolben) gebildete Brühkammer aufweisen (die vorliegende Erfindung ist jedoch nicht auf solche Kaffeemaschinen beschränkt). Wird daher nachfolgend beispielhaft vom Einführen des Pressmittels in den Siebträger bzw. dem Siebträger gesprochen, so ist darunter ganz allgemein ein Einführen des Pressmittels in die Brühkammer bzw. die Brühkammer zu verstehen. Insbesondere kann von oben nach unten gebrüht werden; ebenso sind jedoch Varianten umfasst (z.B. bei Kaffeevollautomaten), die von unten nach oben brühen.

Wie den vorhergehenden Ausführungen entnommen werden kann (so kann beispielsweise die Eintauchtiefe des Pressmittels im Siebträger zum Verpressen des Kaffeemehls 20 bis 30 mm betragen, bei einer Höhe des Siebträgerinnenvolumens von beispielsweise 40 mm, wohingegen ein maximales Herausführen um einige mm zum Entlasten ausreicht), ist unter dem Herausführen des Pressmittels aus dem Siebträger lediglich der Akt der Bewegung zu verstehen, mit dem der Abstand des Pressmittels vom Innenboden des Siebträgers (im Vergleich zum Zustand der maximalen Verpressung des Kaffeemehls) wieder vergrößert wird, und keine Beschreibung der Relativposition von Pressmittel und Siebträger zu verstehen. In der Regel verbleibt daher das Pressmittel (bzw. dessen Unterseite) während des gesamten Herausführvorgangs im Siebträger, wird also nicht aus diesem entnommen (lediglich Anheben des Pressmittels innerhalb des Siebträgers). Ebenso wird unter dem Einführen des Pressmittels in den Siebträger in der Regel lediglich verstanden, dass das (sich mit seiner Unterseite ständig im Siebträger befindliche) Pressmittel innerhalb des Siebträgers abgesenkt wird.

Insbesondere sollte der Druck auf den Kaffeekuchen während des Auffahrens des Pressmittels so groß sein, dass beim Herausziehen des Pressmittels (bzw. dem Öffnen der Brühkammer) ein auf den Kaffeekuchen einwirkender Unterdruck im Bereich zwischen Pressmittel und der diesem zugewandten Kuchenoberfläche verhindert werden kann. Dabei können Drücke auf den Kaffeekuchen vom Atmosphärendruck bis hin zu mehreren bar ausgeübt werden. Bevorzugt ist ein Druck auf den Kaffeekuchen von 1 bar. Eine entsprechende Drucksteuerung kann durch eine Steuereinheit der Kaffeemaschine mikroprozessorgestützt erfolgen.

In der Regel ist das Zuleitmittel der Kaffeemaschine so ausgebildet, dass es in die Brühkammer mündet. Zum Ausbilden der Brühkammer bzw. zum Verschließen der Brühkammer so, dass das Wasser dem Kuchen in der Brühkammer unter Druck zugeführt werden kann, können neben dem Siebträger und dem Pressmittel weitere Bauelemente vonnöten sein (beispielsweise eine O-Ring-Dichtung zwischen einer Innenwandung des Siebträgers und der dieser Innenwandung zugewandten Außenwandung des in den Siebträger eintauchenden Pressmittels).

Erste vorteilhafterweise realisierbare Merkmale sind in Anspruch 2 beschrieben. Weitere vorteilhafterweise realisierbare Merkmale lassen sich Anspruch 3 entnehmen. Dabei können (dies gilt auch für sämtliche nachfolgend noch als vorteilhafterweise realisierbar beschriebene Merkmale) die Merkmale des Anspruchs 3 zusätzlich zu den Merkmalen des Anspruchs 2 verwirklicht werden, jedoch auch unabhängig davon (also ohne die Merkmale des Anspruchs 2).

Als Luftquelle wird bevorzugt eine Luftpumpe eingesetzt, es lässt sich jedoch auch eine Druckluftquelle verwenden.

Weitere vorteilhafterweise realisierbare Merkmale lassen sich dem abhängigen Anspruch 4 entnehmen.

Gemäß Anspruch 4 ist die Luftzuleitung zur aktiven Luftzufuhr unter einem von der Luftquelle erzeugten Druck ausgebildet (in der Regel ist dieser erzeugte Druck gegenüber dem Umgebungsdruck außerhalb der Brühkammer erhöht). Das Rückschlagventil kann so eingestellt sein, dass die Luftquelle (insbesondere wenn diese als Luftpumpe ausgebildet ist) gegen hohe Brühdrücke, die während des Brühens in der Brühkammer herrschen, geschützt ist.

Weitere vorteilhafterweise realisierbare Merkmale lassen sich Anspruch 5 entnehmen.

Dabei kann/können die Verbindungsöffnung(en) über eine oder mehrere Verbindungsleitung(en) in die Umgebung außerhalb der Brühkammer führen, also Fluidverbindung zur Umgebungsluft aufweisen. In dieser/n Verbindungsleitung(en) kann/können dann das/die Rückschlagventil(e) ausgebildet sein. Gemäß dieser Ausbildung ist Luft passiv in die Brühkammer einbringbar, um dort den gewünschten Druck auf den Kaffeekuchen aufzubringen (passiv meint dabei, dass das Aufbringen des gewünschten Druckes über eine Druckdifferenz zwischen dem momentan in der Brühkammer herrschenden Druck einerseits und dem Außendruck der Umgebungsluft außerhalb der Brühkammer andererseits, die zu einem Einströmen von Luft in die Brühkammer führt, erfolgt, also ohne dass eine Luftquelle zum aktiven Einbringen von Luft in die Brühkammer vorhanden ist).

Die Funktionsweise der in den Ansprüchen 3 bis 5 beschriebenen Varianten ist dabei wie folgt: Ist ein ausreichender Mindestbrühdruck in der Brühkammer vorhanden, so wird/werden durch diesen das Verschlussmittel bzw. das/die vorzugsweise federbelastete(n) Rückschlagventil(e) gegen den Umgebungsluftdruck bzw. gegen der Druck der Luftquelle verschlossen und ein Brühen unter einem hohen Brühdruck in der Brühkammer ist so möglich. Das Verschlussmittel bzw. das/die Rückschlagventil(e) kann/können aber auch so eingestellt werden, dass in dem Moment, in dem das Herausführen des Pressmittels aus dem Siebträger beginnt (dies kann noch vor jeglichem Brühdruckaufbau durch das Zuleitmittel geschehen, vorteilhafterweise geschieht dies jedoch wenn bereits ein gewisser Brühdruck aufgebaut worden ist), das Verschlussmittel bzw. das/die Rückschlagventil(e) durch den Umgebungsluftdruck bzw. aktiv durch die aus der Luftquelle ausströmende Luft (z. B. unter einem Druck zwischen 0.1 bar und 1bar) geöffnet wird/werden (so dass Luft in die Brühkammer einströmt). Insbesondere kann so Umgebungsluft (oder auch die aus der Luftquelle zugeführte Luft) sofort in die Brühkammer gelangen, um dort den gewünschten Mindestdruck auf den Kuchen so auszuüben, dass ein Unterdruck, der den Kuchen aufreißen könnte, verhindert wird.

Weitere vorteilhafterweise realisierbare Merkmale sind in Anspruch 6 beschrieben.

Hierbei ist die Ausbildung so, dass Umgebungsluft sofort, d.h. praktisch in dem Moment, in dem das Entlasten des Kaffeekuchens durch Anheben des Pressmittels aus dem Siebträger beginnt, in die Brühkammer gelangt, um dort den gewünschten Druck auf den Kaffeekuchen auszuüben bzw. einen den Kuchen zerreißenden Unterdruck zu vermeiden.

Weitere vorteilhafterweise realisierbare Merkmale lassen sich Anspruch 7 entnehmen.

Dabei ist die Funktion der Kaffeemaschine grundsätzlich ähnlich wie bei der in Anspruch 6 beschriebenen Variante, nur strömt die Umgebungsluft nicht über das Pressmittel 2 in die Brühkammer ein, sondern aus einer Innenwandung des Siebträgers und verhindert hierdurch ebenfalls beim Auffahren des Pressmittels einen schädlichen Unterdruck. Dabei können bevorzugt außenumfangsseitig der Innenwandung (und bevorzugt dicht oberhalb des dem Pressmittel zugewandten oberen Kaffeekuchenrandes) mehrere einzelne Verbindungsöffnungen vorgesehen sein, die in einen ersten, um die Innenwandung des Siebträgers umlaufenden (im Falle einer zylindrischen Brühkammer: ringförmig umlaufenden) Abschnitt der Verbindungsleitung führen. In einem mit diesem ersten Abschnitt verbundenen zweiten Abschnitt der Verbindungsleitung kann ein Rückschlagventil so integriert sein, dass beim Schließen des Rückschlagventils alle Verbindungsöffnungen gegenüber der Umgebungsluft abgedichtet werden. Die Presskraft des Pressmittels und/oder die während des Verpressens vom Pressmittel zurückgelegte Wegstrecke kann/können (unter Zuhilfenahme geeignet positionierter Sensoren wie z.B. Drucksensoren und/oder Wegstreckenmesser) so eingestellt werden, dass der Kaffeekuchen soweit zusammengepresst wird, dass nach dem Verpressen die einzelnen Verbindungsöffnungen gerade freiliegen. Die Füllmenge an Kaffeemehl kann dabei über eine dem Mahlwerk der Kaffeemaschine nachgeordnete Dosiereinheit (die eine geeignete, in die Brühkammer führende Schütte umfassen kann) geeignet festgelegt werden.

Weitere vorteilhafterweise realisierte Merkmale lassen sich Anspruch 8 entnehmen.

Dabei kann das Zuleitmittel eine mit ihrem ersten Ende über die dem Kaffeemehl bzw. Kaffeekuchen gegenüberliegende Oberfläche des Pressmittels in die Brühkammer mündende Wasserzuführung umfassen. Diese Wasserzuführung kann an ihrem zweiten, dem ersten Ende gegenüberliegenden Ende eine Wasserpumpe (bevorzugt samt eines Heißwasserbereiters wie beispielsweise eines Boilers) des Zuleitmittels umfassen, mit der das Wasser vom Zuleitmittel in die Brühkammer gepumpt werden kann und mit der in der Brühkammer gegen den Kaffeekuchen ein Brühdruck aufgebaut werden kann. Das erste Ende dieser Wasserzuführung kann dabei als Verteilersieb in der dem Kaffeemehl bzw. Kuchen gegenüberliegenden Oberfläche des Pressmittels ausgeformt sein (über das das Wasser unter Druck in die Brühkammer eingeleitet werden kann, so dass gegen den Kuchen in der Brühkammer besagter Brühdruck aufgebaut werden kann). Dieses Verteilersieb kann mit dem im gegenüberliegenden Boden des Siebträgers ausgebildeten Filtersieb (Abflusssieb für den Siebträger bzw. die Brühkammer) und der Seitenwandung des Siebträgers die Brühkammer bzw. deren Brühraum begrenzen.

Sind beide Merkmale des abhängigen Anspruchs 8 verwirklicht, so bilden die Baugruppen Pressmittel, Siebträger und Brühkammer eine Brühgruppe.

Prinzipiell ist auch eine seitliche Wasserzufuhr (also nicht durch das Pressmittel) in die Brühkammer denkbar.

Weitere vorteilhafterweise realisierbare Merkmale lassen sich (auch unabhängig voneinander) den abhängigen Ansprüchen 9 bis 11 entnehmen.

Die Ansteuerung des/der Rückschlagventils/e kann indirekt erfolgen (z.B. Rückschlagventil öffnet durch den Luftdruck und wird durch Federkraft oder sich aufbauenden Brühdruck geschlossen, also indirekte Ansteuerung durch den Druck) oder auch durch die mikroprozessorbasierte Steuereinheit.

Wie Anspruch 12 beschreibt, handelt es sich bei dem Siebträger der vorliegenden Erfindung vorteilhafterweise um einen abnehmbaren, in eine Halterung am Gehäuse der Kaffeemaschine einsetzbaren Siebträger. Es sind jedoch auch andere Konstruktionen denkbar, so dass erfindungsgemäß der Begriff des Siebträgers sehr allgemein zu verstehen ist. Beispielsweise kann es sich auch um einen fest in eine Kaffeemaschine eingebauten Hohlraum handeln, der zur Aufnahme des Kaffeemehls ausgebildet ist und der zumindest Abschnitte der Brühkammer ausformt.

Beim Verfahren gemäß Anspruch 13 ist sowohl ein trockenes Verpressen (Zuleiten von Wasser über das Zuleitmittel erst nach dem Verpressen) des Kaffeemehls als auch ein Nasspressen des Kaffeemehls (Zuleiten von Wasser über das Zuleitmittel bereits vor dem Verpressen) möglich.

Erfindungsgemäß ist somit zunächst ein Entlasten während des Brühdruckanstiegs möglich: um das Aufreißen des Kuchens zu vermeiden, kann der Kolben so angesteuert werden, dass er nicht vor einer Pre-Infusion auffährt, sondern erst während der Brühdruck bereits ansteigt. (Die Pre-Infusion bezeichnet ein Befeuchten des trockenen Kaffeemehls vor der eigentlichen Brühung, um die Partikel zum Quellen zu bringen und um dadurch die Aromastoffe besser lösen zu können. Ein weiterer Grund ist ein Erreichen einer geschlossenen Oberfläche des Kaffeekuchens, um ein Aufreißen des Kuchens bei Druckaufschlag zu verhindern und eine gleichmäßige Verteilung des Wassers durch den Kuchen zu erreichen. Die Pre-Infusion kann mit Wasser oder mit Wasserdampf erfolgen. Die für die Pre-Infusion benötigte Wassermenge hängt vom Wareneinsatz an Kaffee ab, wobei das Ziel eine komplette Befeuchtung des Kuchens ohne Wasseraustritt aus dem Auslauf der Brühkammer ist. Somit muss die Wasser- bzw. Wasserdampfmenge bei der Pre-Infusion auf den Wareneinsatz an Kaffeemehl abgestimmt werden; beispielsweise kann 1 g Wasser pro 1 g Kaffeemehl für die Pre-Infusion eingesetzt werden.) Der Druck im Wasser drückt den Kuchen nach unten, wodurch dieser kompakt verpresst bleibt und nicht aufreißt. Ein Channeling wird dadurch vermieden und es wird eine optimale Extraktion erreicht.

Erfindungsgemäß wird somit vorteilhafterweise nach dem Verpressen des trockenen Kaffeemehls zunächst eine Pre-Infusion mit einer ausreichenden Wassermenge durchgeführt. Dadurch wird der Kuchen benässt und eine glatte Oberfläche entsteht. Nach einer definierten Wartezeit (Pause) oder auch unmittelbar nach der Pre-Infusion oder nach einem weiteren Verpressen des Kaffeekuchens nach der Pre-Infusion (sogenanntes Nasspressen, hierzu wird das Kaffeemehl trocken verpresst, es erfolgt die Pre-Infusion und dann wird das nasse Kaffeemehl ein weiteres Mal verpresst) kann die Wasserpumpe gestartet werden, wodurch sich der Brühdruck aufbaut. Während dieser Phase bzw. kurz nach dem Druckaufbau kann sich das Pressmittel einige Millimeter nach oben bewegen, um dem Kuchen Platz zum Quellen und dem Wasser Platz zum Verteilen zu geben. Durch diesen Druck wird der Kuchen unten gehalten und reißt nicht auf.

Ein weiterer grundlegender Lösungsansatz der Erfindung ist das Entlasten mit Luftdruck. Hier kann, um das Aufreißen des Kuchens beim Hochfahren des Pressmittels zu vermeiden, die Steuerung der Kaffeemaschine so eingestellt werden, dass das Pressmittel erst nach einer Pre-Infusion auffährt. Während des Auffahrens wird aktiv Luft in den Brühraum gegeben, um dort einerseits einen Unterdruck zu vermeiden und andererseits den stark verdichteten Kuchen nach unten zu drücken. Nach dem Verpressen des trockenen Kaffeemehls findet vorteilhafterweise die Pre-Infusion mit ausreichender Wassermenge statt, so dass der Kuchen benässt und eine glatte Oberfläche des Kuchens hergestellt wird. Der Kuchen sollte dabei möglichst vollständig benässt werden. Durch die Presskraft und die Wasserzugabe entsteht eine Querspannung im Kuchen. Diese hält den kompakten Kuchen durch die erhöhte Reibung an Ort und Stelle. Wenn nach dieser Pre-Infusion der Kolben hochfährt, entsteht ein Unterdruck in der (geschlossenen) Brühkammer und der Kuchen wird im Stand der Technik aufgerissen (bricht z.B. in der Mitte). Um dies zu vermeiden, wird erfindungsgemäß während des Auffahrens aktiv Luft, beispielsweise mittels einer Luftpumpe, in den Brühraum gegeben, damit der Kuchen in kompakter Form am Siebboden des Siebträgers bleibt. Nachdem oberhalb des Kuchens Platz in der Brühkammer geschaffen wurde, beginnt die Brühung mit Wasserdruck. Statt des aktiven Luftzugebens ist während des Auffahrens auch ein passives Luftzugeben (Einsaugen von Luft aus der Umgebung durch eine Verbindungsöffnung in die Brühkammer) möglich.

Die vorliegende Erfindung hat gegenüber der aus dem Stand der Technik bekannten Vorgehensweise insbesondere die folgenden Vorteile:
- Erfindungsgemäß wird durch die beschriebenen Entlastungstechniken beim Anheben des Pressmittels aus dem Siebträger ein Channeling vermieden, so dass die Extraktion und die Ausbeute beim Extrahieren (durch die geschlossene Oberfläche des Kaffeekuchens) verbessert werden kann.
- Durch den während der gesamten Brühung homogen verpresst bleibenden Kuchen wird eine optimale Extraktion erzielt.
- Kontinuierlichere Brühzeit: Die Brühzeitschwankungen von Brühung zu Brühung verringern sich dadurch, dass stets ein homogen verpresster Kaffeekuchen sichergestellt ist und somit bei jeder Brühung der gleiche Fließwiderstand vorliegt.
- Die Cremabildung wird optimiert: Eine homogene Verpressung und Struktur des Kuchens verhinderen Channeling, das heisst, das Kaffeemehl wirkt wie eine Blende oder Düse und erzeugt dadurch die Crema.

Nachfolgend wird die Erfindung anhand mehrerer Ausführungsbeispiele beschrieben. Dabei zeigen:
Figur 1: den grundlegenden Aufbau einer elektrisch betriebenen Kaffeemaschine.
Figur 2: eine Ausführungsform, bei der das Entlasten durch den Brühdruck selbst erfolgt, der Kolben also erst mit dem Herausführen beginnt, wenn bereits ein bestimmter Mindestdruck in der Brühkammer anliegt.
Figur 3: eine weitere Ausführungsform der Erfindung, bei der das Entlasten aktiv durch Luftzufuhr aus einer Luftquelle erfolgt.
Figur 4: eine weitere Ausführungsform der Erfindung, bei der das Entlasten durch passive Luftzufuhr über die Umgebung erfolgt.
Figur 5: ein weiteres Ausführungsbeispiel, bei dem das Entlasten ebenfalls durch passive Luftzufuhr aus der Umgebung erfolgt.

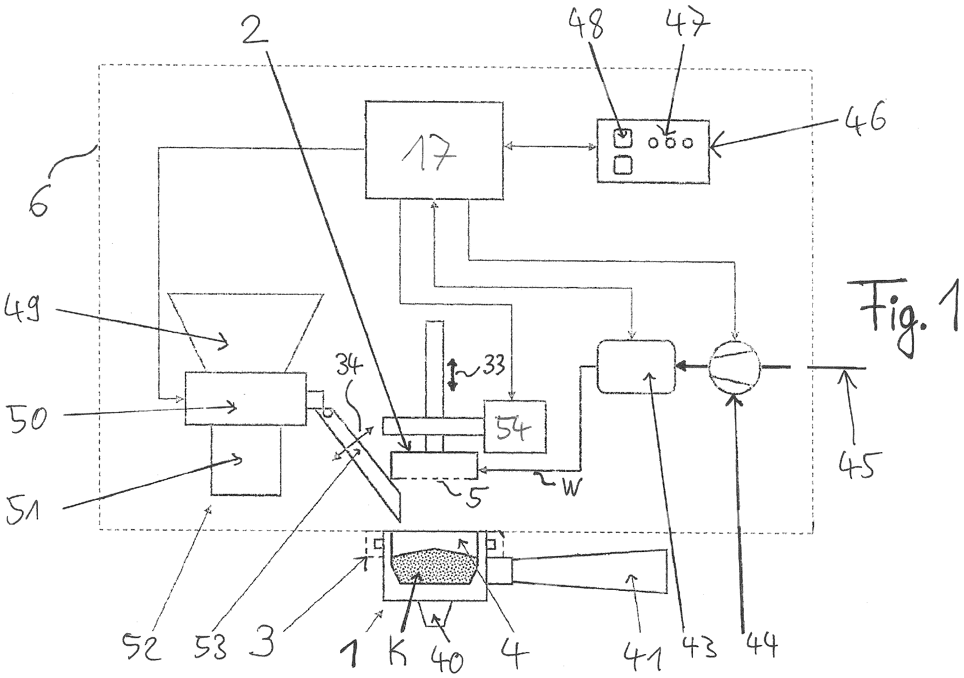

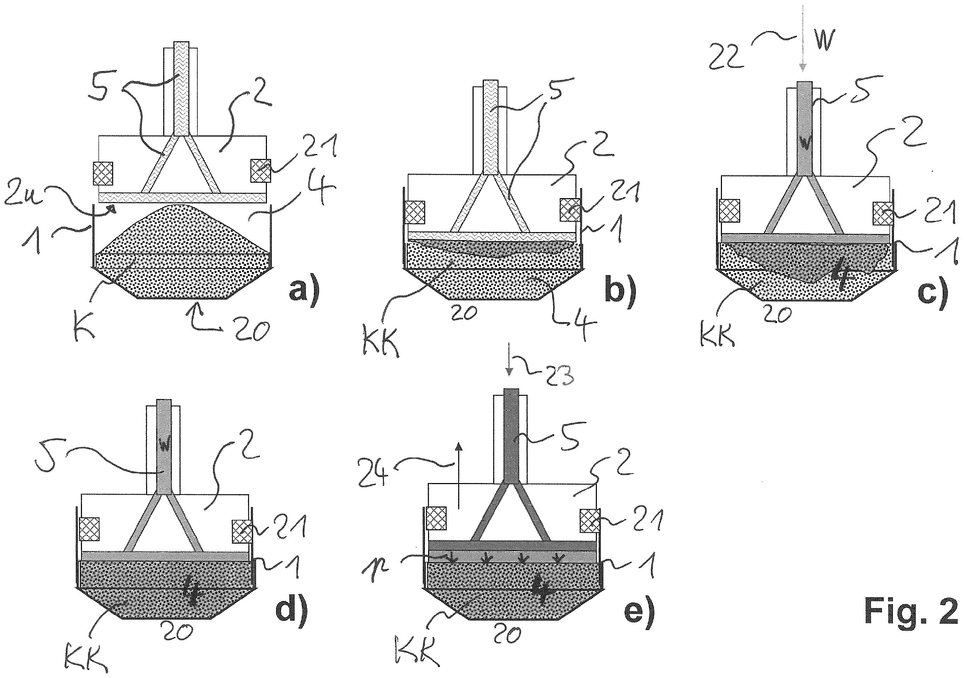

Figur 1 beschreibt die grundlegende Funktionsweise einer elektrisch betriebenen Kaffeemaschine gemäß der Erfindung. Das Gehäuse 6 der Kaffeemaschine ist mit einer Halterung 3 versehen, in der ein mit Kaffeemehl K befüllter Siebträger 1 so am Gehäuse 6 der Kaffeemaschine befestigt werden kann, dass der Siebträger 1 sowie das nachfolgend noch beschriebene Pressmittel 2 in Form eines Kolbens eine verschließbare Brühkammer 4 ausbilden. Der Kolben 2 mit seinem runden Stempel ist dabei achszentriert oberhalb des zylindrischen Siebträgers 1 angeordnet und kann (Pfeil 33), durch die mikroprozessorbasierte Steuereinheit 17 der Maschine gesteuert, zum Verpressen des Kaffeemehls K und zum abdichtenden Verschließen der Brühkammer 4 entlang der gemeinsamen (Zylinder-)Symmetrieachse des Kolbens 2 und des Siebträgers 1 in den Siebträger 1 eintauchen bzw. eingeführt werden. An seiner dem Siebträger 1 bzw. seiner dem zu verpressenden Kaffeemehl K zugewandten Unterseite 2u (vgl. Figur 2) ist am Kolben 2 das Verteilersieb des Zuleitmittels 5 der Kaffeemaschine erkennbar. Am Siebträger 1 ist ein Griff 41 zum Befestigen des Siebträgers 1 in der Halterung 3 sowie zum Abnehmen des Siebträgers 1 von der Kaffeemaschine zum Befüllen des Siebträgers mit Kaffeemehl K angebracht. 40 beschreibt die Auslauföffnung des Siebträgers 1.

Das Zuleitmittel 5 weist eine Wasserzuführung auf, die an der Unterseite 2u des Kolbens 2 mittels des bereits erwähnten Verteilersiebs in die Brühkammer 4 mündet. Das Verteilersieb ist über eine entsprechende Wasserleitung für Wasser W in fluidischem Kontakt mit dem Heißwasserbereiter (Boiler) 43, dem von einer Wasserpumpe 44 Wasser W aus einem Kaltwasseranschluss 45 der Kaffeemaschine zugeführt wird.

Wird die Brühkammer 4 (angesteuert durch die Steuereinheit 17) vermittels der Antriebseinheit 54 durch Hochfahren 33 des Kolbens 2 vollständig geöffnet (maximaler Abstand zwischen Siebträger 1 und Kolben 2 bzw. Verteilersieb in demselben), so kann der Brühkammer 4 bzw. dem Innenraum des Siebträgers 1 Kaffeemehl K wie folgt zugeführt werden: Mittels des Mahlwerkes 50 werden dem Bohnenbehälter 49 entnommene Kaffeebohnen in der Kaffeemühle 52 der Kaffeemaschine gemahlen (51 skizziert den Antriebsmotor des Mahlwerkes 50) und über die bewegliche 34 Schütte 53 der Brühkammer 4 zugeführt. Die Steuerung des Mahlvorganges erfolgt dabei über die Steuereinheit 17. Der Mahlvorgang kann dabei über das vermittels der Tasten 48 der Bedieneinheit 46 gewählte Getränk, das an der optischen Anzeige 47 der Bedieneinheit 46 auch angezeigt wird, individuell durch die Steuereinheit 17 eingestellt werden.

Die nachfolgenden Figuren 2 bis 5 beschreiben verschiedene Ausführungsbeispiele wie die erfindungsgemäße Entlastungstechnik in der in Figur 1 gezeigten Grundkonfiguration verwirklicht werden kann. Dabei sind identische bzw. sich zumindest in ihrer Funktion entsprechende Bauelemente der erfindungsgemäßen Kaffeemaschine mit identischen Bezugszeichen versehen; bei den Ausführungsbeispielen werden daher jeweils nur der Aufbau und die Funktion noch nicht beschriebener Merkmale beschrieben, wohingegen bereits bei vorangehenden Beispielen beschriebene Merkmale und Funktionen nicht erneut beschrieben werden.

Figur 2 zeigt den zeitlichen Ablauf (in Reihenfolge a) bis e)) eines ersten erfindungsgemäßen Ausführungsbeispiels, bei dem ein Entlasten während des Brühdruckanstiegs oder wenn bereits ein Brühdruck anliegt gezeigt ist. Dabei bezeichnet K das noch unverpresste Kaffeemehl und KK den bereits verpressten Kaffeekuchen. Durch die dem Kaffee K bzw. KK zugewandte, untere Oberfläche 2u des Kolbens 2, die mit einem Verteilersieb versehen ist, kann der Brühkammer 4 über die durch den Kolbenkörper des Kolbens 2 hindurch ausgebildete Wasserzuleitung des Zuleitmittels 5, die in fluidischem Kontakt mit dem Verteilersieb steht, Wasser oder Wasserdampf (während der Pre-Infusion) und Wasser (während der Brühung) zugeführt werden. Zum Verpressen des Kaffeemehls K in der Brühkammer 4 taucht der Kolben 2 in den Siebträger 1 ein. Dabei dichtet die Dichtung 21 (z.B. O-Ring; es können auch andere Formdichtungen oder zweiteilige Dichtungen, z.B. bestehend aus O-Ring und Teflonring, verwendet werden), die im Körper des Pressmittels 2 (also auf der dem Kaffeepulver K bzw. dem Siebträger 1 gegenüberliegenden Seite des Verteilersiebs) integriert ist, den dünnen, ringförmigen Spalt zwischen der Zylindermantelfläche des Kolbenkörpers 2 und der Innenwandung der Seitenwand des Siebträgers 1 zum Verschließen der Brühkammer 4 ab. 20 skizziert das Auslaufsieb an der Unterseite des Siebträgers 1.

Wie Figur 2a) zeigt, wird zunächst das lockere Kaffeemehl K vom Kolben 2 angepresst. Das Verteilersieb an der unteren Oberfläche 2u des Kolbens 2 ist dabei (vgl. die beim Stand der Technik beschriebenen Probleme) befeuchtet bzw. benetzt. Der Druck in der Brühkammer beträgt hier 0 Bar.

In Figur 2b) ist das Kaffeemehl K zum Kuchen KK verpresst. Das Kaffeemehl an der der Unterseite 2u zugewandten Oberfläche des Kuchens KK verbindet sich mit dem Restwasser im Verteilersieb. Der Druck in der Brühkammer beträgt 0 Bar.

In Figur 2c) wird eine Pre-Infusion durchgeführt, hier mit Wasser W, das (Pfeil 22) der abgedichteten 21 Brühkammer 4 über die im Kolben 2 ausgebildete Wasserzuführung des Zuleitmittels zugeleitet wird. Dem Kaffeekuchen KK wird somit aktiv Wasser zugeführt. Dabei beträgt der Pre-Infusionsleitungs- oder Pumpendruck (über die Wasserpumpe 44) zwischen 0,5 Bar und maximal 12 Bar.

Gemäß Figur 2d) erfolgt anschließend eine Pre-Infusionspause über eine Einwirkungszeit von bevorzugt zwischen 0,5 Sekunden und 2 Sekunden, wobei der Druck in der Brühkammer (Staudruck) nach wie vor zwischen 0,5 bis maximal 12 Bar beträgt. Die Pausenzeit (Einwirkzeit) ist variabel über die Steuereinheit 17 einstellbar. Diese Pause ist jedoch nicht zwingend notwendig und kann bei Bedarf auch entfallen. In dieser Phase wirkt das heiße Wasser im Kuchen KK und die Partikel desselben quellen auf. Nach der Pause kann auch ein weiteres Pressen des Kuchens durchgeführt werden (Nasspressen) um den Kuchen weiter zu verpressen und die Brühzeit zu verlängern.

Schließlich beginnt die Brühung (Figur 2e)) unter hohem Druck, d.h. der Brühdruck beträgt nun zwischen 6 und 12 Bar in der Brühkammer 4. Der Druck wird durch entsprechende Wasserzufuhr 23 über die Pumpe 44 erzielt bzw. gesteuert. Nun beginnt auch die erfindungsgemäße Entlastung: das Anheben bzw. Herausführen des Kolbens 2 aus dem Siebträger 1 beginnt erst jetzt, also zu einem Zeitpunkt, bei dem ein Druck von ≥ 6 Bar in der Brühkammer 4 auf den Kuchen KK wirkt, also ein ausreichender Druck durch diesen Brühdruck auf den Kaffeekuchen KK aufgebracht wird (vgl. Druck p). Das Anheben bzw. Herausführen des Kolbens 2 ist durch den Pfeil 24 gekennzeichnet.

Das im Schritt der Figur 2e) erfolgende Entlasten während bereits ein Brühdruck von ≥ 6 Bar anliegt (durch Aufwärtsbewegen des Kolbens 2) kann jedoch auch bereits unmittelbar nach dem Schritt der Figur 2d), also unmittelbar nach der Pre-Infusionsphase noch bevor der eigentliche Brühdruck anliegt, erfolgen: auch hier liegt bereits ein Mindestdruck (Staudruck) von 0,5 Bar an. Allerdings besteht hier eine gewisse Gefahr, dass der verpresste feuchte Kuchen am Verteilersieb kleben bleibt, wenn der Druck in der Brühkammer noch zu gering ist und dann teilweise mit nach oben gezogen wird. (Der Brühdruck aus Schritt e) würde den hochgezogenen Kuchenteil zwar anschließend wieder nach unten befördern, allerdings ist dann der Kuchen KK nicht mehr in einem definierten, verpressten Zustand, da teilweise gelockert.)

Während der Entlastungsphase der Figur 2e) ist der Brühdruck in der Brühkammer 4 und somit auch der auf den Kuchen KK aufgebrachte Druck nicht genau definiert, da der Druck in der Brühkammer 4 durch die Wasserpumpe 44 sehr schnell ansteigen kann. So kann der Gegendruck stark variieren, was jedoch grundsätzlich, sofern ein ausreichender Mindestdruck sichergestellt ist, kein Problem darstellt. Der Brühdruck kann mit diversen Pumpen erzeugt und eingestellt werden (z.B. Flügelzellenpumpe über einen Bypass), so dass der Brühdruck je nach Blendwirkung des Kuchens (die wiederum vom Mahlgrad und von der Mehlmenge abhängt) leicht bis stark, je nach Pumpenart, variieren kann. Für die erfindungsgemäße Entlastungsfunktion muss der Druck, der über den Brühdruck auf den Kuchen KK aufgebracht wird, höher sein als die Adhäsionskraft des Kuchens. Hierfür reicht oftmals bereits der Leitungsdruck der Anschlusszuleitung 45 aus.

Prinzipiell kann in einer Variante das Entlasten nach dem in Figur 2c) oder sogar während der Pre-Infusionsphase aus Figur 2c) durchgeführt werden (noch vor dem in Figur 2d) gezeigten Schritt). Hierfür muss die Wasserpumpe 44 kurzzeitig angeschaltet werden, um den notwendigen Druck in der Brühkammer 4 zu erzeugen, der dafür sorgt, dass der Kuchen KK gegen den Boden des Siebträgers 1 gepresst wird. Dazu ist dann die durch die Pumpe 44 beförderte Wassermenge so abzustimmen, dass die Brühung selbst noch nicht einsetzt (und kein Brühwasser aus dem Auslauf 20 gerät).

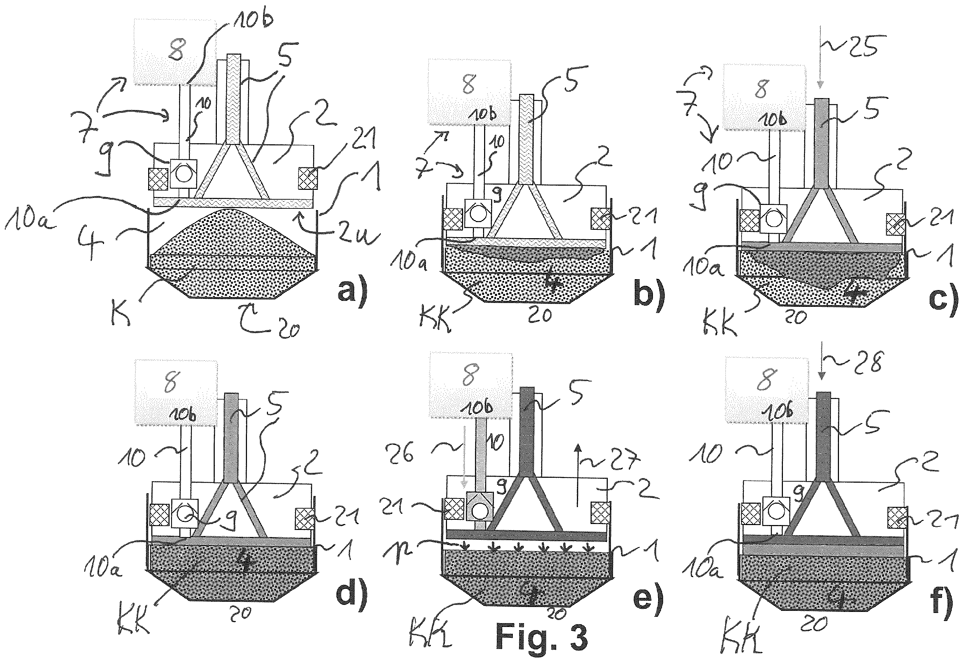

Figur 3 zeigt die zeitliche Abfolge bei einem weiteren Ausführungsbeispiel, bei dem der Aufbau aus Siebträger 1, Brühkammer 4, Kolben 2 und Zuleitmittel 5 grundsätzlich dem in Figur 2 geschilderten Aufbau entspricht, so dass nachfolgend nur die Unterschiede beschrieben werden. Beim in Figur 3 gezeigten Ausführungsbeispiel wird der in der Brühkammer 4 auf den Kaffeekuchen KK im Moment des Herausführens des Kolbens 2 aufzubringende Druck p (vgl. Figur 3e)) durch aktives Einbringen von Luft in die Brühkammer 4 über ein in die Brühkammer 4 mündendes Luftzufuhrmittel 7 bewirkt. Das Mittel 7 umfasst eine Luftpumpe als Luftquelle 8, eine von der Luftquelle 8 in den Kolben 2 führende Luftzuleitung 10 sowie ein in der Luftzuleitung 10 ausgebildetes Rückschlagventil 9. Die der Luftquelle 8 bzw. der Mündung 10b der Luftzuleitung 10 zur Luftquelle 8 abgewandte Seite (gegenüberliegendes Ende 10a) der durch den Kolben 2 führenden Luftzuleitung 10 mündet auf Höhe des Verteilersiebs des Kolbens 2, also auf Höhe der Oberfläche 2u, über den Kolben 2 in die Brühkammer 4. Das Rückschlagventil 9 ist im Kolbenkörper des Kolbens 2 integriert ausgebildet und öffnet in Richtung zum Innenraum der Brühkammer 4 hin.

Wie Figur 3a) zeigt, erfolgt zunächst bei einem Druck von 0 Bar in der Brühkammer 4 ein Anpressen des lockeren Kaffeemehls K durch den Kolben 2 im Siebträger 1. Das Verteilersieb in der Oberfläche 2u des Kolbens 2 ist wie vorbeschrieben (unerwünschterweise) benetzt.

Im Zustand in Figur 3b) ist das Kaffeemehl K zum Kuchen KK verpresst und die Brühkammer 4 durch Eintauchen des Kolbens 2 über die an der Innenwandung des Siebträgers 1 anliegende Dichtung 21 im Kolbenkörper 2 abgedichtet. Die der Oberfläche 2u zugewandten Anteile des Kaffeemehls im Kuchen KK verbinden sich mit dem Restwasser des Verteilersiebs. Der Druck in der Brühkammer 4 beträgt nach wie vor 0 Bar (Luftpumpe 8 nicht in Betrieb).

Figur 3c) zeigt die Phase der Pre-Infusion, wobei der Druck in der Brühkammer 4 0,5 bis maximal 12 Bar beträgt: dem Kuchen KK wird aktiv Wasser über die Wasserzuführung des Zuleitmittels 5 zugeführt (der Druck wird über den Leitungsdruck oder den vermittels der Pumpe 44 erzeugten Wasserdruck aufgebracht, vgl. Pfeil 25).

Figur 3d) zeigt die sich dem Schritt c) anschließende Pre-Infusionspausenzeit (Einwirkzeit), bei der der Staudruck in der Brühkammer 4 nach wie vor 0,5 bis maximal 12 Bar beträgt. In dieser Phase wirkt das heiße Wasser W im Kaffeemehl des Kuchens KK und lässt dessen Partikel quellen (Dauer der Phase d) 0 bis mehrere Sekunden). Auch hier ist ein Nasspressen möglich.

Während der bisher beschriebenen, aufeinanderfolgenden Schritte a) bis d) ist die Luftpumpe 8 nicht in Betrieb und das Rückschlagventil 9 ist geschlossen. In Figur 3e) beginnt nun die Entlastungsphase, also das Anheben bzw. Herausführen des Kolbens 2 aus dem Siebträger 1. Während dieser Phase wird der notwendige Druck p auf den Kaffeekuchen KK in der Brühkammer 4 aktiv durch Luftzufuhr über das Luftzufuhrmittel 7 aufgebracht (27 skizziert das Anheben bzw. Herausführen des Kolbens 2 aus dem Siebträger 1): zu Beginn des Anhebens bzw. Herausziehens des Kolbens 2 (oder sogar bereits kurz davor) arbeitet die Luftpumpe 8 und presst Luft über die Mündung 10b, den Kanal 10, das Rückschlagventil 9 und die Mündung 10a in das Verteilersieb in den Brühraum der Brühkammer 4, um dort den notwendigen Druck p aufrechtzuerhalten (Luftleitung durch den Pfeil 26 gekennzeichnet), während der Kolben 2 auffährt 27.

Der durch Wasser W in der Brühkammer erzeugte Druck beträgt hier nach wie vor 0 Bar, so dass der Druck p auf den Kaffeekuchen KK in dieser Phase alleine durch den Druck der zugeführten Luft aufgebracht wird.

Während des Entlastens der Figur 3e) wird die Luftpumpe 8 aktiv betrieben, um bei geöffnetem Ventil 9 aktiv Luft in den Brühraum der Brühkammer 4 zu pumpen und um dort einen den Kuchen KK auseinanderreißenden Unterdruck zu verhindern. Dies insbesondere dann, wenn die Luft nicht sofort in die Brühkammer 4 gelangen kann, was beispielsweise durch eine Wassersäule in der Luftleitung 10 bzw. im Ende 10a derselben passieren kann (wenn dies konstruktiv nicht vermieden werden kann).

Nach dem kompletten Auffahren des Kolbens 2 (z.B. um 5 mm im Siebträger 1 nach oben, so dass die Dichtung 21 die Brühkammer 4 nach wie vor abdichtet und der notwendige Brühdruck gegen den Kuchen KK erzeugt werden kann) beginnt die Brühung unter hohem Druck von zwischen 6 und 12 Bar in der Brühkammer 4, vgl. Figur 3f).

In der Brühungsphase der Figur 3f) wird somit Wasser W unter hohem Druck durch den Kuchen KK gepresst (Wasserzufuhr: Pfeil 28).

Wie Figur 3f) zeigt, ist während der Brühungsphase das Rückschlagventil 9 (durch den in der Brühkammer herrschenden hohen Wasserdruck) verschlossen, was in der Regel zum Schutz der Luftpumpe 8 vor dem hohen Brühdruck auch notwendig ist.

Alternativ (nicht gezeigt) kann die Luft über die Leitung 10 auch vermittels eines Luftdruckspeichers wie beispielsweise eines Druckbehälters anstelle der Pumpe 8 eingebracht werden.

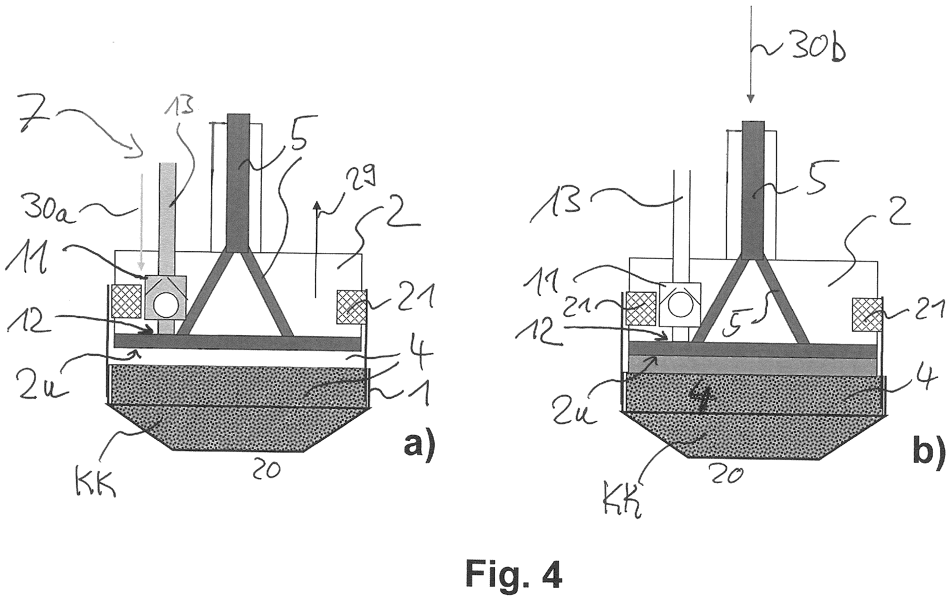

Figur 4 zeigt ein weiteres Ausführungsbeispiel, dessen Aufbau und Funktionsweise grundsätzlich den in Figur 3 gezeigten ähnelt, so dass nachfolgend nur die Unterschiede beschrieben werden. In Figur 4 entfällt die Luftpumpe 8, so dass das Luftzufuhrmittel 7 zum passiven Zuführen von Luft in die Brühkammer 4 aus der Umgebung bzw. durch den Luftdruck der die Brühkammer 4 umgebenden Luft ausgebildet ist. Die Luftzuleitung 10 aus Figur 3 ist somit in Figur 4 als Verbindungsleitung 13 mit der Umgebungsluft ausgebildet. Das Rückschlagventil ist hier mit dem Bezugszeichen 11 versehen. Die dem Kuchen KK bzw. der Brühkammer 4 zugewandte Mündung (Verbindungsöffnung, um einen fluidischen Kontakt der Brühkammer über das Ventil 11 und die Leitung 13 zur Umgebungsluft zu ermöglichen) ist mit dem Bezugszeichen 12 versehen.

Figur 4 zeigt mit Figur 4a) und Figur 4b) die (nach ihrer Reihenfolge) den Schritten aus Figur 3e) und Figur 3f) entsprechende Schritte des Entlastens und der nachfolgenden Brühung (die Schritte gemäß Fig. 3a) bis 3d) werden vorab durchgeführt). Im Moment des beginnenden Entlastens des Kuchens KK durch den Beginn des Anhebens bzw. Herausführens des Kolbens 2 (Figur 4a)) würde normalerweise im Brühraum der Kammer 4 ein Unterdruck entstehen, der den Kaffeekuchen KK zumindest teilweise nach oben mitreißen würde. Durch die fluidische Verbindung zur Umgebungsluft strömt jedoch (Pfeil 30a) Luft durch die Verbindungsleitung 13 sowie die Verbindungsöffnung 12 in den Brühraum und verhindert so die Ausbildung eines Unterdrucks in der Brühkammer 4 beim Auffahren 29 des Kolbens 2. Auch hier beträgt der Wasserdruck in der Brühkammer 0 Bar, so dass der notwendige Druck auf den Kaffeekuchen KK während des Entlastens alleine durch einen Luftdruck, hier den in der Brühkammer 4 wirkenden Umgebungsluftdruck, aufgebracht wird. Während der eigentlichen Brühung (Wasserdruck in der Brühkammer 6 bis 12 Bar durch Wasserzufuhr 30b in Figur 4b) ist das in Figur 4a) zum Lufteinströmen geöffnete Ventil 11 wieder verschlossen, um die Brühung unter hohem Druck in der Brühkammer überhaupt zu ermöglichen.

Kann das Rückschlagventil 11 nahe an der Brühkammer 4 montiert werden, so kann sich keine Wassersäule im Luftpfad 12, 13 bilden. Nach der Pre-Infusion und dem Verdichten des Kuchens KK kann Luft sofort in die Brühkammer 4 gelangen, wenn der Kolben nach oben fährt 29. Es entsteht somit kein Unterdruck und der Kuchen KK kann sich vom Verteilersieb des Kolbens 2 lösen.

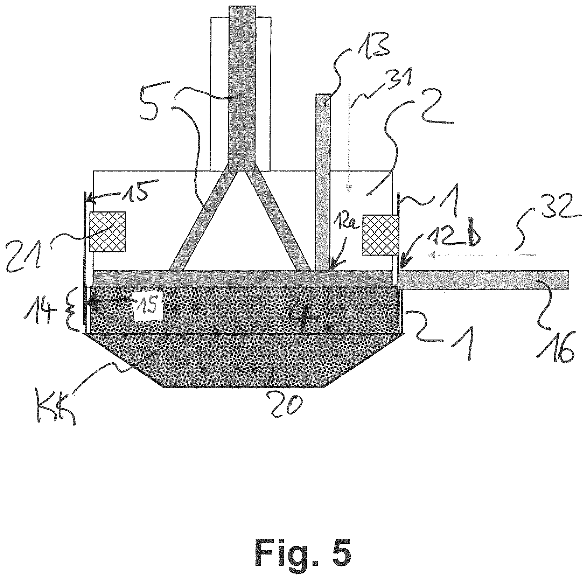

Figur 5 zeigt ein weiteres Ausführungsbeispiel, dessen Funktionsweise grundsätzlich wie diejenige des in Figur 4 gezeigten Ausführungsbeispiels ist, so dass nachfolgend nur die Unterschiede zu Figur 4 (insbesondere: in der Bauform) beschrieben werden. Zusätzlich zur Verbindungsöffnung 12 aus Figur 4 (die hier mit 12a bezeichnet ist), die über das Rückschlagventil 11 (hier nicht gezeigt) und die Verbindungsleitung 13 die fluidische Verbindung nach außen zum Einströmen von Luft 31 herstellt, weist die Innenwandung 15 (Zylindermantelfläche) des Siebträgers 1 außerhalb des vom Kaffeekuchen im verpressten Zustand bedeckten Wandabschnitts 14 (unmittelbar oberhalb der dem Pressstempel 2 zugewandten Oberfläche des Kuchens KK) ringförmig umlaufend eine Vielzahl einzelner Verbindungsöffnungen 12b (die hier nur angedeutet sind) auf. Diese ringförmig umlaufenden Verbindungsöffnungen 12b führen in einen außerhalb der Innenwandung 15 umlaufenden Ringkanal im Siebträger 1, der in fluidischer Verbindung mit einer weiteren Verbindungsleitung steht, die in fluidischem Kontakt (über ein hier nicht gezeigtes, weiteres Rückschlagventil) mit der Umgebungsluft steht. Der ringförmig umlaufende Luftkanal sowie die radial nach außen führende weitere Verbindungsleitung bilden hier zusammen eine Verbindungsleitung, die den fluidischen Kontakt des Innenraums der Brühkammer 4 über die Verbindungsöffnungen 12b mit der Umgebung ermöglicht. Das Einströmen der Luft durch diese Verbindungsleitung 16 ist mit dem Pfeil 32 gekennzeichnet. Auch in der Leitung 16 ist ein (weiteres) Rückschlagventil positioniert (nicht gezeigt), dessen Funktionsweise derjenigen des Ventils in der Leitung 13 entspricht.

Wie Figur 5 zeigt, kann der Lufteintritt in die Kammer 4 sowohl über die Kolbenfläche 12a (dabei können auch Öffnungen in der gesamten Unterseite 2u vorgesehen sein) als auch durch die Seitenwandung des Siebträgers 1 oberhalb des Kuchens KK erfolgen. Dabei können die Öffnungen 12a, 12b als Löcher, als Ringspalte oder auch in anderer Form ausgebildet sein.

Grundsätzlich kann bei den vorbeschriebenen Ausführungsbeispielen der Entlastungsweg (Auffahrweg des Kolbens 2 von seiner untersten, maximal verpressenden Stellung in seine oberste Stellung) variiert werden und sich von wenigen Zehntel Millimetern bis hin zu mehreren Millimetern erstrecken. Die Auffahrhöhe hängt dabei hauptsächlich vom Mahlgrad und von der Mehlmenge ab.

## Patentansprüche

1. Elektrisch betriebene Kaffeemaschine
mit einer mit Kaffeemehl (K) befüllbaren Brühkammer (4),
mit einem zum Verpressen des Kaffeemehls (K) in die Brühkammer (4) einführbaren, zum Entlasten des verpressten Kaffeemehls (Kaffeekuchen, KK) anschließend aus der Brühkammer (4) wieder herausführbaren Pressmittel (2),
mit einem zur Zufuhr von Wasser (W) unter Druck in die Brühkammer (4) ausgebildeten Zuleitmittel (5),
in der Brühkammer (4) im Moment des beginnenden Entlastens des Kaffeekuchens (KK) durch den Beginn des Herausführens des Pressmittels (2) aus der Brühkammer (4) ein Druck (p) auf den Kaffeekuchen (KK) aufbringbar ist,
**gekennzeichnet durch**
eine mikroprozessorbasierte Steuereinheit (17) zum Ansteuern des Pressmittels (2) und des Zuleitmittels (5).

2. Elektrisch betriebene Kaffeemaschine nach dem vorhergehenden Anspruch
***dadurch gekennzeichnet, dass***
der Druck (p) auf den Kaffeekuchen (KK) durch den vermittels der Zufuhr des Wassers (W) in der Brühkammer (4) aufbaubaren Brühdruck aufbringbar ist.

3. Elektrisch betriebene Kaffeemaschine nach einem der vorhergehenden Ansprüche
***dadurch gekennzeichnet, dass***
der Druck (p) auf den Kaffeekuchen (KK) durch ein in die Brühkammer (4) mündendes Luftzufuhrmittel (7) aufbringbar ist,
wobei bevorzugt das Luftzufuhrmittel (7) eine Luftquelle (8) und/oder ein mit Durchlassrichtung in die Brühkammer (4) hinein angeordnetes Rückschlagventil (9, 11) umfasst.

4. Elektrisch betriebene Kaffeemaschine nach dem vorhergehenden Anspruch
***dadurch gekennzeichnet, dass***
das Luftzufuhrmittel (7) eine mit ihrem ersten Ende (10a) über die dem Kaffeemehl (K) und/oder Kaffeekuchen (KK) gegenüberliegende Oberfläche (2u) des Pressmittels (2) in die Brühkammer (4) mündende Luftzuleitung (10) umfasst, an deren zweiten, gegenüberliegenden Ende (10b) eine/die Luftquelle (8) positioniert ist,
wobei bevorzugt in der Leitung (10) zwischen der Luftquelle (8) und dem einmündenden, ersten Ende (10a) ein/das Rückschlagventil (9) mit seiner Durchlassrichtung in die Brühkammer (4) hinein angeordnet ist.

5. Elektrisch betriebene Kaffeemaschine nach Anspruch 3
***dadurch gekennzeichnet, dass***
das Luftzufuhrmittel (7) eine oder mehrere Verbindungsöffnung(en) (12) zur Umgebungsluft außerhalb der Brühkammer (4) umfasst, wobei die Verbindungsöffnung(en) (12) zum Verschließen der Brühkammer (4) vermittels eines Verschlussmittels, das bevorzugt ein/das oder mehrere mit seiner/ihrer Durchlassrichtung in die Brühkammer (4) hinein angeordnete(s) Rückschlagventil(e) (11) umfasst, verschließbar ist/sind.

6. Elektrisch betriebene Kaffeemaschine nach dem vorhergehenden Anspruch
***gekennzeichnet durch***
eine über die dem Kaffeemehl (K) und/oder Kaffeekuchen (KK) gegenüberliegende Oberfläche (2u) des Pressmittels (2) in die Brühkammer (4) mündende Verbindungsöffnung (12, 12a), die über eine Verbindungsleitung (13) mit der Umgebungsluft außerhalb der Brühkammer (4) in Kontakt steht, wobei die Verbindungsleitung (13) mittels eines/des mit seiner Durchlassrichtung in die Brühkammer (4) hinein angeordneten Rückschlagventils (11) verschließbar ist.

7. Elektrisch betriebene Kaffeemaschine nach Anspruch 5
***gekennzeichnet durch***
eine oder mehrere außerhalb des vom Kaffeekuchen (KK) bedeckten Wandabschnitts (14) einer Innenwandung der Brühkammer (4), insbesondere der Innenwandung (15) eines Siebträgers (1) der Brühkammer (4), in diese Innenwandung eingebrachte Verbindungsöffnung(en) (12b), die über eine Verbindungsleitung (16) mit der Umgebungsluft außerhalb der Brühkammer (4) in Kontakt steht/stehen, wobei die Verbindungsleitung (16) mittels eines/des mit seiner Durchlassrichtung in die Brühkammer (4) hinein angeordneten Rückschlagventils (11) verschließbar ist.

8. Elektrisch betriebene Kaffeemaschine nach einem der vorhergehenden Ansprüche
***dadurch gekennzeichnet, dass***
die Brühkammer (4) einen/den Siebträger (1) und das Pressmittel (2) umfasst oder aus einem/dem Siebträger (1) und dem Pressmittel (2) ausgebildet ist
und/oder
dass die Brühkammer (4) verschließbar ist
und/oder
dass das Zuleitmittel (5) durch das Pressmittel (2) hindurch in die Brühkammer (4) mündet
und/oder
dass das Pressmittel (2) einen Kolben umfasst oder ein Kolben ist.

9. Elektrisch betriebene Kaffeemaschine nach einem der vorhergehenden Ansprüche
***gekennzeichnet durch***
eine mikroprozessorbasierte Steuereinheit (17) zum Steuern , des Luftzufuhrmittels (7) und/oder des/der Rückschlagventils/e (9, 11) und/oder von Bauelementen der genannten Baugruppen (7, 9, 11).

10. Elektrisch betriebene Kaffeemaschine nach einem der vorhergehenden Ansprüche
***dadurch gekennzeichnet, dass***
die Kaffeemaschine, bevorzugt deren mikroprozessorbasierte Steuereinheit (17) gemäß Anspruch 9, so ausgebildet ist, dass das Herausführen des Pressmittels aus der Brühkammer (4), das bevorzugt ein Anheben des Pressmittels (2) in der Brühkammer (4) ist, nicht beginnen kann, bevor der durch Zufuhr von Wasser (W) über das Zuleitmittel (5) in der Brühkammer (4) aufgebaute Brühdruck einen vorbestimmten Mindestdruck von > 0 bar übersteigt, bevorzugt einen vorbestimmten Mindestdruck von ≥ 0.5 bar übersteigt, bevorzugt einen vorbestimmten Mindestdruck von ≥ 6 bar übersteigt.

11. Elektrisch betriebene Kaffeemaschine nach einem der vorhergehenden Ansprüche
***dadurch gekennzeichnet, dass***
die Kaffeemaschine, bevorzugt vermittels des Zuleitmittels (5) und/oder bevorzugt gesteuert über die Steuereinheit (17) gemäß Anspruch 9, zum Durchführen einer Preinfusion, also dem Befeuchten des trockenen, noch nicht verpressten, des trockenen, gerade dem Verpressen unterworfenen und/oder des trockenen, bereits verpressten Kaffeemehls (K) ausgebildet ist, und so ausgebildet ist, dass das Herausführen des Pressmittels aus der Brühkammer (4), das bevorzugt ein Anheben des Pressmittels (2) in der Brühkammer (4) ist, nicht vor dem Beginn der Preinfusion beginnen kann, sondern erst während der Preinfusion beginnen kann, bevorzugt erst nach Abschluss der Preinfusion beginnen kann.

12. Elektrisch betriebene Kaffeemaschine nach einem der vorhergehenden Ansprüche
***dadurch gekennzeichnet, dass***
die Brühkammer (4) einen/den Siebträger (1) und das Pressmittel (2) umfasst, wobei der Siebträger als abnehmbarer, in eine Halterung (3) am Gehäuse (6) der Kaffeemaschine einsetzbarer Siebträger (1) ausgebildet ist,
dass das Pressmittel zum Verpressen des Kaffeemehls (K) in den eingesetzten Siebträger (1) einführbar ist und anschließend zum Entlasten des verpressten Kaffeemehls (Kaffeekuchen, KK) aus dem eingesetzten Siebträger (1) wieder herausführbar ist, und
dass der in die Halterung (3) eingesetzte Siebträger (1) und das Pressmittel (2) die verschließbare Brühkammer (4) ausbilden.

13. Verfahren zum Betreiben einer elektrischen Kaffeemaschine, bevorzugt einer Kaffeemaschine nach einem der vorhergehenden Ansprüche, bei dem
eine Brühkammer (4) mit Kaffeemehl (K) befüllt wird,
ein Pressmittel (2) so in die Brühkammer (4) eingeführt wird, insbesondere in der Brühkammer (4) abgesenkt wird, dass das Kaffeemehl (K) in der Brühkammer (4) verpresst wird,
mit einem Zuleitmittel (5) Wasser (W) unter Druck in die Brühkammer (4) eingeleitet wird, und
das verpresste Kaffeemehl (Kaffeekuchen, KK) entlastet wird, indem das Pressmittel (2) aus der Brühkammer (4) wieder herausgeführt wird, bevorzugt in der Brühkammer (4) wieder angehoben wird,
wobei in der Brühkammer (4) im Moment des beginnenden Entlastens des Kaffeekuchens (KK) durch den Beginn des Herausführens des Pressmittels aus der Brühkammer (4), bevorzugt des Anheben des Pressmittels (2) in der Brühkammer (4), ein Druck (p) auf den Kaffeekuchen (KK) aufgebracht wird,
**dadurch gekennzeichnet, dass**
das Ansteuern des Pressmittels (2) und des Zuleitmittels (5) durch eine mikroprozessorbasierte Steuereinheit (17) erfolgt.

## Claims

1. An electrically operated coffee machine
having a brewing chamber (4) fillable with ground coffee (K),
having a pressing means (2) which can be introduced into the brewing chamber (4) in order to compress the ground coffee (K) and then can be guided out of the brewing chamber (4) again to remove the load from the compressed ground coffee (coffee cake, KK),
having a supply means (5) to feed water (W) under pressure into the brewing chamber (4),
in the brewing chamber (4) at the moment of the incipient load removal from the coffee cake (KK) through the beginning of the guiding out of the pressing means (2) from the brewing chamber (4), a pressure (p) being able to be applied to the coffee cake (KK),
**characterised by**
a microprocessor-based control unit (17) to actuate the pressing means (2) and the supply means (5).

2. An electrically operated coffee machine according to the preceding claim,
**characterised in that**
the pressure (p) can be applied to the coffee cake (KK) by the brewing pressure able to be built up by means of the feed of the water (W) in the brewing chamber (4).

3. An electrically operated coffee machine according to any one of the preceding claims,
**characterised in that**
the pressure (p) can be applied to the coffee cake (KK) by an air supply means (7) opening into the brewing chamber (4),
wherein preferably the air supply means (7) comprises an air source (8) and/or a non-return valve (9, 11) arranged with passage direction into the brewing chamber (4).

4. An electrically operated coffee machine according to the preceding claim,
**characterised in that**
the air supply means (7) comprises an air feed line (10) opening into the brewing chamber (4) by means of its first end (10a) via the surface (2u), facing the ground coffee (K) and/or coffee cake (KK), of the pressing means (2), a/the air source (8) being positioned at the second, opposite end (10b) of the air feed line (10),
wherein preferably a/the non-return valve (9) with its passage direction into the brewing chamber (4) is arranged in the line (10) so as to be between the air source (8) and the discharging, first end (10a).

5. An electrically operated coffee machine according to claim 3,
**characterised in that**
the air supply means (7) comprises one or a plurality of connecting opening(s) (12) for ambient air outside of the brewing chamber (4), wherein to close the brewing chamber (4) the connecting opening(s) (12) is/are closeable by means of a closing means which preferably comprises a/the or a plurality of non-return valve(s) (11) arranged with its/their passage direction into the brewing chamber (4).

6. An electrically operated coffee machine according to the preceding claim,
**characterised by**
a connecting opening (12, 12a) opening into the brewing chamber (4) via the surface (2u), facing the ground coffee (K) and/or coffee cake (KK), of the pressing means (2), which connecting opening (12, 12a) is in contact via a connecting line (13) with the ambient air outside of the brewing chamber (4), wherein the connecting line (13) is closeable by means of a/the non-return valve (11) arranged with its passage direction into the brewing chamber (4).

7. An electrically operated coffee machine according to claim 5,
**characterised by**
one or a plurality of connecting opening(s) (12b) made in an inner wall of the brewing chamber (4), in particular the inner wall (15) of a filter holder (1) of the brewing chamber (4), so as to be exterior to the wall portion (14), of the inner wall, covered by the coffee cake (KK), which connecting openings(s) is/are in contact via a connecting line (16) with the ambient air outside of the brewing chamber (4), wherein the connecting line (16) is closeable by means of a/the non-return valve (11) arranged with its passage direction into the brewing chamber (4).

8. An electrically operated coffee machine according to any one of the preceding claims,
**characterised in that**
the brewing chamber (4) comprises a/the filter holder (1) and the pressing means (2) or is formed of a/the filter holder (1) and the pressing means (2)
and/or
**in that** the brewing chamber (4) is closeable
and/or
**in that** the supply means (5) opens into the brewing chamber (4) through the pressing means (2)
and/or
**in that** the pressing means (2) comprises a plunger or is a plunger.

9. An electrically operated coffee machine according to any one of the preceding claims,
**characterised by**
a microprocessor-based control unit (17) for controlling the air feed means (7) and/or the non-return valve(s) (9, 11) and/or components of the above-mentioned assemblies (7, 9, 11).

10. An electrically operated coffee machine according to any one of the preceding claims,
**characterised in that**
the coffee machine, preferably its microprocessor-based control unit (17) according to claim 9, is formed such that the guiding out of the pressing means from the brewing chamber (4), which is preferably a raising of the pressing means (2) in the brewing chamber (4), cannot begin before the brewing pressure, built up in the brewing chamber (4) through the feeding of water (W) via the supply means (5), exceeds a predetermined minimum pressure of > 0 bar, preferably a predetermined minimum pressure of ≥ 0.5 bar, preferably a predetermined minimum pressure of ≥ 6 bar.

11. An electrically operated coffee machine according to any one of the preceding claims,
**characterised in that**
the coffee machine, preferably by means of the supply means (5) and/or preferably controlled via the control unit (17) according to claim 9, is formed to carry out a pre-infusion, therefore to wet the dry, not yet compressed ground coffee (K), the dry ground coffee (K) just subjected to compression and/or the dry, already compressed ground coffee (K), and is formed in such a manner that the guiding out of the pressing means from the brewing chamber (4), which is preferably a raising of the pressing means (2) in the brewing chamber (4), cannot begin before the beginning of the pre-infusion, but rather can only begin during the pre-infusion, preferably can only begin after completion of the pre-infusion.

12. An electrically operated coffee machine according to any one of the preceding claims,
**characterised in that**
the brewing chamber (4) comprises a/the filter holder (1) and the pressing means (2), wherein the filter holder is formed as a removable filter holder (1) insertable in a holding means (3) at the housing (6) of the coffee machine,
**in that** the pressing means can for compressing the ground coffee (K) be introduced into the inserted filter holder (1) and then can be guided out of the inserted filter holder (1) again to remove the load from the compressed ground coffee (coffee cake KK), and
**in that** the filter holder (1) inserted into the holding means (3) and the pressing means (2) form the closable brewing chamber (4).

13. A method of operating an electric coffee machine, preferably a coffee machine according to any one of the preceding claims, in which
a brewing chamber (4) is filled with ground coffee (K),
a pressing means (2) is introduced into the brewing chamber (4), in particular is lowered in the brewing chamber (4), in such a manner that the ground coffee (K) in the brewing chamber (4) is compressed,
water (W) under pressure is introduced into the brewing chamber (4) using a supply means (5), and
the compressed ground coffee (coffee cake KK) is relieved of load in that the pressing means (2) is guided out from the brewing chamber (4) again, preferably is raised in the brewing chamber (4) again,
wherein in the brewing chamber (4) at the moment of the incipient removal of load from the coffee cake (KK) through the beginning of the guiding out of the pressing means from the brewing chamber (4), preferably the raising of the pressing means (2) in the brewing chamber (4), a pressure (p) is applied to the coffee cake (KK),
**characterised in that**
the actuation of the pressing means (2) and the supply means (5) takes place through a microprocessor-based control unit (17).

## Revendications

1. Machine à café électrique
avec un chambre de percolation (4) pouvant être remplie de café moulu (K),
avec un moyen de pressage (2) pouvant être inséré dans la chambre de percolation (4) pour presser le café moulu (K), puis pouvant être retiré de la chambre de percolation (4) pour libérer le café moulu pressé (marc de café, KK),
avec un moyen d'alimentation (5) conçu pour l'introduction d'eau (W) sous pression dans la chambre de percolation (4),
une pression (p) pouvant être appliquée sur le marc de café (KK) dans la chambre de percolation (4) au début de la libération du marc de café (KK) en commençant à retirer le moyen de pressage (2) de la chambre de percolation (4),
**caractérisée par**
une unité de commande (17) basée sur un microprocesseur pour la commande du moyen de pressage (2) et du moyen d'alimentation (5).

2. Machine à café selon la revendication précédente,
**caractérisée en ce que**
la pression (p) peut être appliquée sur le marc de café (KK) en établissant une pression de percolation au moyen de l'introduction de l'eau (W) dans la chambre de percolation (4).

3. Machine à café électrique selon l'une des revendications précédentes,
**caractérisée en ce que**
la pression (p) peut être appliquée sur le marc de café (KK) par un moyen d'introduction d'air (7) débouchant dans la chambre de percolation (4),
de préférence le moyen d'introduction d'air (7) comprenant une source d'air (8) et/ou un clapet anti-retour (9, 11) disposé avec un sens de passage vers l'intérieur de la chambre de percolation (4).

4. Machine à café selon la revendication précédente,
**caractérisée en ce que**
le moyen d'introduction d'air (7) comprend une conduite d'alimentation d'air (10) débouchant, avec sa première extrémité (10a), au-dessus de la surface (2u) du moyen de pressage (2), opposée au café moulu (K) et/ou au marc de café (KK), dans la chambre de percolation (4), et, au niveau de sa deuxième extrémité (10b) opposée, se trouve une/la source d'air (8),
de préférence dans la conduite (10) entre la source d'air (8) et la première extrémité (10a) d'admission, un/le clapet anti-retour (9) est disposé avec son sens de passage vers l'intérieur de la chambre de percolation (4).

5. Machine à café selon la revendication 3,
**caractérisée en ce que**
le moyen d'introduction d'air (7) comprend une ou plusieurs ouvertures de liaison (12) vers l'air ambiant à l'extérieur de la chambre de percolation (4), les ouvertures de liaison (12) pouvant être obturées pour l'obturation de la chambre de percolation (4) à l'aide d'un moyen d'obturation comprenant de préférence un/le ou plusieurs clapets anti-retour (11) disposés avec un sens de passage vers l'intérieur de la chambre de percolation (4).

6. Machine à café selon la revendication précédente,
**caractérisée par**
une ouverture de liaison (12, 12a) débouchant au-dessus de la surface (2u) du moyen de pressage (2), opposée au café moulu (K) et/ou au marc de café (KK), qui est en contact, par l'intermédiaire d'une conduite de liaison (13), avec l'air ambiant à l'extérieur de la chambre de percolation (4), la conduite de liaison (13) pouvant être obturée au moyen d'un/du clapet anti-retour (11) disposé avec son sens de passage vers l'intérieur de la chambre de percolation (4).

7. Machine à café électrique selon la revendication 5,
**caractérisée par**
une ou plusieurs ouvertures de liaison (12b), réalisées à l'extérieur de la portion de paroi (14) recouverte de marc de café (KK) d'une paroi interne de la chambre de percolation (4), plus particulièrement de la paroi interne (15) d'un support de tamis (1) de la chambre de percolation (4), dans cette paroi interne, qui sont en contact, par l'intermédiaire d'une conduite de liaison (16), avec l'air ambiant à l'extérieur de la chambre de percolation (4), la conduite de liaison (16) pouvant être obturée au moyen d'un/du clapet anti-retour (11) disposé avec son sens de passage vers l'intérieur de la chambre de percolation (4).

8. Machine à café selon l'une des revendications précédentes,
**caractérisée en ce que**
la chambre de percolation (4) comprend un/le support de tamis (1) et le moyen de pressage (2) ou est constituée d'un/du support de tamis (1) et du moyen de pressage (2)
et/ou
la chambre de percolation (4) peut être obturée
et/ou
le moyen d'alimentation (5) débouche à travers le moyen de pressage (2) dans la chambre de percolation (4)
et/ou
le moyen de pressage (2) comprend un piston ou est un piston.

9. Machine à café selon l'une des revendications précédentes,
**caractérisée par**
une unité de commande (17), basée sur un microprocesseur, pour la commande du moyen d'introduction d'air (7) et/ou du/des clapets anti-retour (9, 11) et/ou de composants des modules mentionnés (7, 9, 11).

10. Machine à café selon l'une des revendications précédentes,
**caractérisée en ce que**
la machine à café, de préférence son unité de commande (17), basée sur un microprocesseur, selon la revendication 9, étant conçue de façon à ce que le retrait du moyen de pressage de la chambre de percolation (4), qui est de préférence un soulèvement du moyen de pressage (2) dans la chambre de percolation (4), ne puisse pas commencer avant que la pression de percolation exercée par l'introduction d'eau (W) par l'intermédiaire du moyen d'alimentation (5) dans la chambre de percolation (4) ne dépasse pas une pression minimale prédéterminée > 0 bar, de préférence ne dépasse pas une pression minimale prédéterminée ≥ 0,5 bar, de préférence ne dépasse pas une pression minimale prédéterminée ≥ 6 bar.

11. Machine à café selon l'une des revendications précédentes,
**caractérisée en ce que**
la machine à café est conçue, de préférence à l'aide du moyen d'alimentation (5) et/ou de préférence est contrôlée par l'intermédiaire de l'unité de commande (17) selon la revendication 9, pour la réalisation d'une pré-infusion, donc de l'humidification du café moulu (K) sec non encore pressé, sec et soumis au pressage et/ou sec déjà pressé, et est conçue de façon à ce que le retrait du moyen de pressage de la chambre de percolation (4), qui est de préférence un soulèvement du moyen de pressage (2) dans la chambre de percolation (4), ne puisse pas commencer avant le début de la pré-infusion mais seulement pendant la pré-infusion, de préférence seulement après la fin de la pré-infusion.

12. Machine à café selon l'une des revendications précédentes,
**caractérisée en ce que**
la chambre de percolation (4) comprend un/le support de tamis (1) et le moyen de pressage (2), le support de tamis étant conçu comme un support de tamis (1) pouvant être inséré dans un support (3) sur le boîtier (6) de la machine à café,
le moyen de pressage pour le pressage du café moulu (K) peut être introduit dans le support de tamis (1) inséré puis retiré du support de tamis (1) inséré pour libérer le café moulu pressé (marc de café, KK) et
le support de tamis (1) inséré dans le support (3) et le moyen de pressage (2) forment la chambre de percolation (4) obturable.

13. Procédé d'exploitation d'une machine à café électrique, de préférence une machine à café selon l'une des revendications précédentes, dans lequel
une chambre de percolation (4) est remplie de café moulu (K),
un moyen de pressage (2) est introduit dans la chambre de percolation (4), plus particulièrement est abaissé dans la chambre de percolation (4) de façon à ce que lé café moulu (K) soit pressé dans la chambre de percolation (4),
avec un moyen d'alimentation (5), de l'eau (W) est introduite sous pression dans la chambre de percolation (4) et
le café moulu pressé (marc de café, KK) est libéré en retirant le moyen de pressage (2) de la chambre de percolation (4), de préférence en le soulevant dans la chambre de percolation (4),
moyennant quoi, dans la chambre de percolation (4), au moment du début de la libération du marc de café (KK) grâce au début du retrait du moyen de pressage de la chambre de percolation (4), de préférence du soulèvement du moyen de pressage (2) dans la chambre de percolation (4), une pression (p) est appliquée sur le marc de café (KK),
**caractérisé en ce que**
la commande du moyen de pressage (2) et du moyen d'alimentation (5) a lieu à l'aide d'une unité de commande (17), basée sur un microprocesseur.
